# FASCICULE DE BREVET EUROPEEN

(11) **EP 3 976 939 B1**
(45) Date de publication et mention de la délivrance du brevet: **08.02.2023**
(21) Numéro de dépôt: 20739754.8
(22) Date de dépôt: 26.05.2020
(51) Int. Cl.: F01D 25/24, F01D 25/16, F23R 3/60, F23R 3/54

(54) **MODULE DE TURBOMACHINE D'AERONEF**
MODUL EINES FLUGZEUGTURBINENTRIEBWERKS
MODULE OF AN AIRCRAFT TURBINE ENGINE

(30) Priorité: 29.05.2019 FR 1905769
(43) Date de publication de la demande: 06.04.2022
(73) Titulaire: Safran Helicopter Engines, 64510 Bordes (FR)
(72) Inventeur: GUEDOT, Thomas, Louis, 77550 MOISSY-CRAMAYEL (FR); CASAUX-BIC, Jean-Maurice, 77550 MOISSY-CRAMAYEL (FR); GRICOURT, Thomas, 77550 MOISSY-CRAMAYEL (FR); LE BONNIEC, Antoine, Thomas, Quentin, 77550 MOISSY-CRAMAYEL (FR)
(74) Mandataire: Gevers & Orès
(86) Numéro de dépôt international: PCT/FR2020/050873
(87) Numéro de publication internationale: WO 2020/240129

(56) Documents cités:
- EP-A1- 2 940 324
- EP-A1- 3 444 441
- EP-A2- 3 069 821
- WO-A1-2014/140493
- DE-A1-102011 108 957
- FR-A1- 3 017 693

## Description

### Domaine technique de l'invention

La présente invention concerne un module de turbomachine d'aéronef.

### Arrière-plan technique

L'état de la technique comprend notamment les documents WO-AL-2014/140493, FR-A1-3 017 693, EP-A2-3 069 821, EP-A1-2 940 324, DE-A1-10 2011 108957 et EP-A1-3 444 441.

Une turbomachine d'aéronef, par exemple d'un avion ou d'un hélicoptère, comprend une entrée d'air alimentant un générateur de gaz qui comprend de l'amont vers l'aval, par référence à l'écoulement des gaz, au moins un compresseur, une chambre annulaire de combustion, et au moins une turbine. Une turbine de turbomachine comprend un ou plusieurs étages de détente comportant un distributeur aubagé formant un stator, et une roue aubagée formant un rotor. Le distributeur est fixé à un carter et la roue comprend un disque portant à sa périphérie des aubes. La roue tourne à l'intérieur du carter et il est connu de prévoir un anneau d'étanchéité autour de cette roue afin de limiter le passage de gaz entre les sommets des aubes et le carter et donc de s'assurer qu'un maximum des gaz de combustion sortant de la chambre traverse la roue pour optimiser le rendement de la turbomachine.

Un anneau d'étanchéité comprend en général un corps annulaire s'étendant autour d'un axe de révolution et comportant une surface externe et une surface interne qui est revêtue d'une couche annulaire d'étanchéité en matériau abradable sur laquelle les sommets des aubes peuvent frotter en fonctionnement.

Il existe actuellement deux technologies d'anneau d'étanchéité. L'anneau selon la première technologie comprend un corps annulaire monobloc qui est fixé par des moyens appropriés à un carter. L'anneau selon la seconde technologie comprend un corps annulaire sectorisé, les secteurs du corps étant fixés indépendamment les uns des autres sur le carter.

Dans ces deux technologies, l'anneau est entouré par une paroi annulaire qui comprend des orifices de passage d'air de refroidissement par impact sur la surface externe du corps de l'anneau. Ce refroidissement permet de mieux maîtriser le comportement thermique de l'anneau en fonctionnement et donc d'optimiser les jeux radiaux entre le corps de l'anneau et les sommets des aubes de la roue en fonctionnement.

La première technologie est intéressante d'un point de vue de l'optimisation de la masse et de l'encombrement tandis que la seconde est intéressante d'un point de vue de la capacité à optimiser le refroidissement et donc le réglage des jeux avec les sommets des aubes, ainsi que de la maintenance et du remplacement aisé de chaque secteur d'anneau.

La présente invention propose un perfectionnement à ces techniques existantes. Elle a notamment pour but de réduire le nombre d'éléments pour la réalisation d'un anneau et d'un module de turbomachine, de façon à limiter le nombre de systèmes de fixation (vis, boulons, brides, etc.), les risques de fuite entre ces éléments, la masse de la turbomachine, etc.

### Résumé de l'invention

La présente invention concerne un module de turbomachine d'aéronef, ce module comportant :
au moins un carter annulaire d'une chambre annulaire de combustion,
au moins un anneau d'étanchéité pour une roue de turbine, et
au moins un support annulaire de palier(s),
caractérisé en ce que ce module est réalisée d'une seule pièce.

La réalisation du module d'une seule pièce permet de simplifier sa conception et sa fabrication, cette réalisation étant de préférence faite par fabrication additive. Il n'est plus nécessaire de prévoir des systèmes de fixation des éléments du module, ce qui simplifie et allège le module.

Le module selon l'invention peut comprendre une ou plusieurs des caractéristiques suivantes, prises isolément les unes des autres ou en combinaison les unes avec les autres :
- le module comprend deux carters annulaires, respectivement interne et externe, définissant entre eux un logement annulaire configuré pour recevoir une chambre annulaire de combustion,
- le carter externe comprend à son extrémité amont une bride annulaire de fixation du module,
- le module comprend deux anneaux d'étanchéité, respectivement amont et aval, chacun de ces anneaux d'étanchéité comportant un corps annulaire et une paroi annulaire s'étendant autour du corps annulaire et à distance radiale de ce corps,
- l'anneau amont, et en particulier sa paroi annulaire, est relié audit carter annulaire interne,
- ledit support de palier(s) comprend deux viroles annulaires, respectivement interne et externe, reliées ensemble par des bras s'étendant sensiblement radialement par rapport à un axe du module,
- la virole externe s'étend entre les anneaux amont et aval et est reliée à l'anneau aval par une partie annulaire élastiquement déformable,
- la virole interne s'étend autour d'une couronne interne et est reliée à cette couronne interne, cette couronne comportant au moins une surface cylindrique de montage d'un palier à roulements,
- l'anneau aval est relié par une couronne externe à une zone de jonction entre lesdits carters annulaires interne et externe,
- la couronne externe comprend à son extrémité aval une bride annulaire de fixation du module.

La présente invention concerne également un procédé de fabrication d'un module tel que décrit ci-dessus, caractérisé en ce qu'il est obtenu par fabrication additive.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] la figure 1 est une demi vue schématique en coupe axiale d'une partie d'une turbomachine d'aéronef,
[Fig. 2] la figure 2 est une demi vue très schématique en coupe axiale d'une partie d'une turbomachine d'aéronef, selon l'art antérieur,
[Fig. 3] la figure 3 est une demi vue très schématique en coupe axiale d'une partie d'une turbomachine d'aéronef, selon un aspect l'invention,
[Fig. 4] la figure 4 est une demi vue schématique en coupe axiale d'un module de turbomachine, selon un aspect de l'invention, et
[Fig. 5] la figure 5 est une vue schématique agrandie d'un détail de la figure 4 et montre un autre aspect de l'invention.

### Description détaillée de l'invention

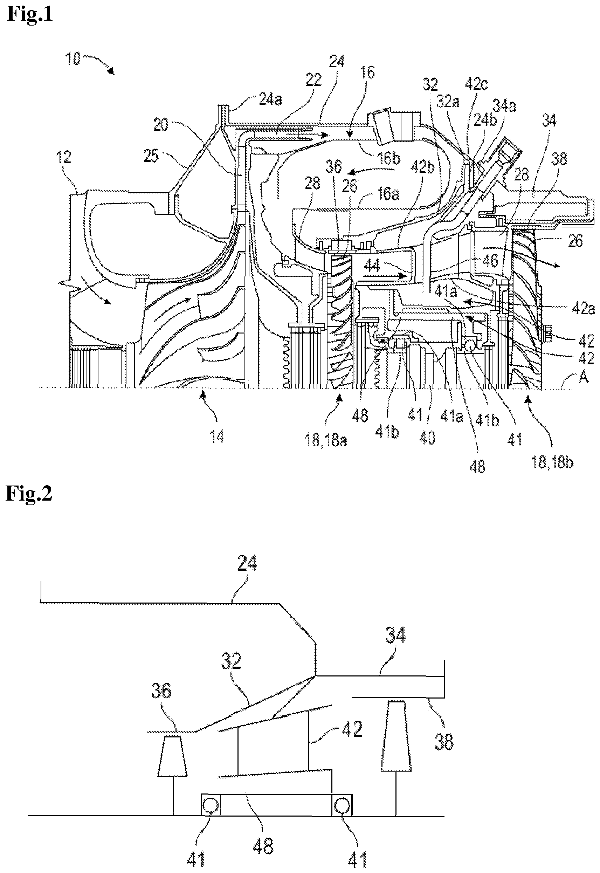

La figure 1 représente une partie d'une turbomachine 10 d'aéronef telle qu'un turboréacteur d'hélicoptère.

La turbomachine 10 comprend d'amont en aval, par référence au sens d'écoulement des gaz (cf. flèches), une entrée d'air 12, au moins un compresseur 14, une chambre annulaire de combustion 16, et au moins une turbine 18.

L'air qui pénètre dans le moteur par l'entrée d'air 12 est comprimé dans le compresseur 14 qui est ici un compresseur centrifuge. L'air comprimé sort radialement vers l'extérieur et alimente la chambre de combustion 16 par l'intermédiaire d'un ensemble annulaire formant un redresseur 20 et un diffuseur 22.

La chambre de combustion 16 comprend deux parois annulaires, respectivement interne 16a et externe 16b qui s'étendent l'une autour de l'autre et qui sont elles-mêmes agencées à l'intérieur d'un carter externe 24 de la chambre de combustion 16.

Ce carter 24 comprend à son extrémité amont une bride annulaire 24a de fixation à des brides annulaires de l'ensemble redresseur-diffuseur 20-22 ainsi que d'un carter 25 du compresseur 14 et de l'entrée d'air 12.

L'air comprimé est mélangé à du carburant puis brûlé dans la chambre de combustion 16, ce qui génère des gaz de combustion qui sont ensuite injectés dans les turbines 18.

Un étage de turbine haute pression 18a est situé juste en aval de la sortie de la chambre de combustion 16 et comprend un distributeur de stator 28 et une roue de rotor 26. Un étage de turbine basse pression 18b est situé en aval de l'étage 18a et comprend également un distributeur 30 et une roue de rotor 26. Un distributeur de turbine comprend une rangée annulaire d'aubes fixes de redressement du flux de gaz, et une roue de turbine comprend une rangée annulaire d'aubes portées par un disque de rotor.

Le carter 24 comprend en outre à son extrémité aval une bride annulaire 24b de fixation à des brides de support d'anneaux d'étanchéité 36, 38.

Un carter 32 s'étend à l'intérieur de la paroi 16a et porte à son extrémité amont l'anneau d'étanchéité 36 qui s'étend autour de la roue 26 de l'étage 18a, et a son extrémité aval une bride 32a de fixation à la bride 24b. Une couronne 34 porte l'anneau d'étanchéité 38 qui s'étend autour de la roue 26 de l'étage 18b. Cette couronne 34 comprend une bride 34a de fixation aux brides 32a, 24b. Chaque anneau d'étanchéité 36, 38 comprend une surface cylindrique interne qui est revêtue d'une couche annulaire abradable configurée pour s'user par frottement avec les sommets des aubes de la roue 26 afin de réduire au maximum les fuites de gaz dans cette zone. La couche abradable est toutefois facultative. Elle peut par ailleurs être présente sur l'un des anneaux, par exemple l'anneau 36, et être absente de l'autre anneau 38. Cette couche abradable peut avoir une fonction de protection thermique.

Les roues 26 sont reliées entre elles par un arbre 40 qui est en outre relié au rouet du compresseur centrifuge 14. L'arbre 40 est guidé en rotation par des paliers à roulement 41 qui sont portés par un support annulaire 42 interposé entre les deux étages 18a, 18b.

Le support de paliers 42 comprend deux viroles annulaires, respectivement interne 42a et externe 42b, reliées entre elles par une rangée annulaire de bras 44 s'étendant sensiblement radialement par rapport à l'axe A de rotation de l'arbre 34. Les bras 44 sont tubulaires et peuvent servir au passage de servitudes 46 telles que des conduites de fluides ou des câbles électriques. Le support de paliers 42 est monté à l'intérieur du carter 32 et porte un boîtier de paliers qui comprend une couronne 48 de support des bagues externes 41a des paliers 41. Les paliers 41 sont ici au nombre de deux, un palier amont à rouleaux et un palier à billes, dont les bagues internes 41b sont directement montées sur l'arbre 40.

La figure 2 montre de manière très schématique l'état actuel de la technique en matière de fabrication et d'assemblage de plusieurs éléments visibles à la figure 1.

Tout d'abord, les anneaux d'étanchéité 36, 38 sont réalisés indépendamment l'un de l'autre et des autres pièces environnantes. Ils sont fixés par des brides ou par des crochets à des carters 32, 34 qui sont eux-mêmes fixés par des brides au carter externe 24 de la chambre. Le support de paliers 42 est également fixé par une bride 42c à ce carter 24.

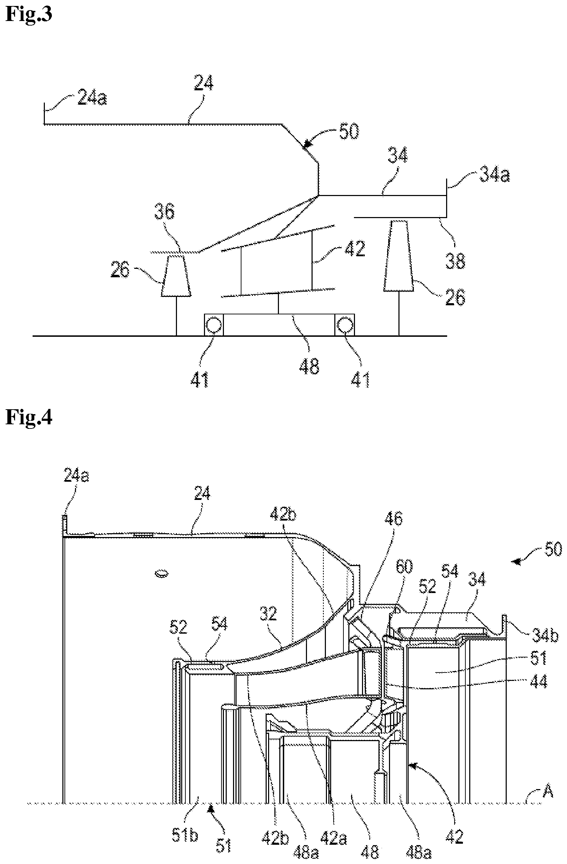

La figure 3 illustre un aspect de l'invention qui consiste à prévoir un module 50 monobloc, c'est-à-dire formé d'une seule pièce de préférence par fabrication additive, et incluant plusieurs des éléments précités.

Dans l'exemple représenté, le module 50 comprend le carter 24, les anneaux d'étanchéité 36, 38 et au moins une partie du support de paliers 42.

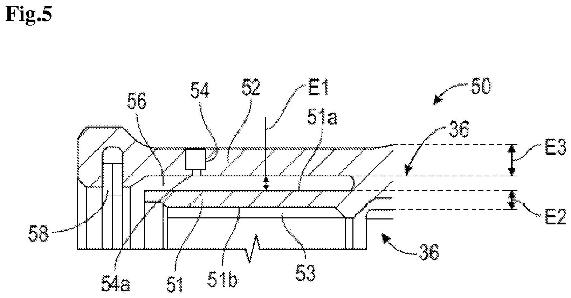

La figure 4 représente un mode de réalisation plus concret de ce module 50 et la figure 5 est une vue de détail de la figure 4 et illustre plus spécifiquement un autre aspect de l'invention concernant les anneaux d'étanchéité 36, 38. Chaque anneau d'étanchéité 36, 38 comprend avantageusement un corps annulaire 51 s'étendant autour de l'axe A et comportant une surface externe 51a et une surface interne 51b qui est revêtue d'une couche annulaire 53 d'un matériau abradable.

L'anneau 36, 38 comporte en outre une paroi annulaire 52 s'étendant autour du corps annulaire 51 et à distance radiale de ce corps. Cette paroi annulaire 52 comporte des orifices 54 de passage d'air de refroidissement par impact sur la surface externe 51a. Comme on le voit clairement à la figure 5, le corps 51 et la paroi 52 sont formés d'une seule pièce et ces éléments ainsi que les orifices 54 sont avantageusement obtenus par fabrication additive.

Le corps 51 et la paroi 52 définissent entre eux un espace annulaire 56 qui est fermé à une extrémité aval et ouvert à une extrémité amont. Cet espace 56 a une épaisseur radiale E1 inférieure ou égale à celle E2 du corps 51 et/ou inférieure ou égale à celle E3 de la paroi 52.

La description qui suit s'applique plus spécifiquement à l'anneau 36 illustré à la figure 5.

La paroi 52 comprend à son extrémité amont une gorge annulaire ouverte radialement vers l'intérieur et dans laquelle est monté un organe annulaire 58 d'étanchéité qui est configuré pour coopérer avec le distributeur 28 de l'étage amont 18a évoqué dans ce qui précède.

La paroi 52 se prolonge vers l'aval et est reliée à ou forme le carter annulaire radialement interne 32 de la chambre de combustion 16.

Le corps 51 se prolonge quant à lui vers l'aval et est relié à ou forme la virole externe 42b du support de paliers 42.

La paroi 52 comprend au moins une rangée annulaire d'orifices 54 de passage d'air régulièrement espacés autour de l'axe A et orientés dans des directions sensiblement radiales par rapport à cet axe. Chacun de ces orifices 54 comprend un rétrécissement 54a à son extrémité radialement interne pour accélérer le flux d'air traversant l'orifice et améliorer le refroidissement par impact du corps 51 de l'anneau 36.

Les anneaux 36, 38 ainsi que l'ensemble du module 50 peuvent être réalisés en alliage métallique. Les couches 53 sont avantageusement réalisées en céramique.

Un autre aspect de l'invention concerne un procédé de fabrication d'un anneau 36, 38 ainsi que du module 50 par fabrication additive.

Dans le mode de réalisation du module de la figure 4, celui-ci comprend :
- les deux carters interne 32 et externe 24,
- les deux anneaux d'étanchéité 36, 38, et
- le support de paliers 42.

Le carter externe 24 comprend à son extrémité amont la bride annulaire 24a de fixation du module, par exemple aux brides précitées du carter 24 et de l'ensemble diffuseur-redresseur 20-22 de la figure 2.

Comme évoqué dans ce qui précède, l'anneau amont 36, et en particulier sa paroi annulaire 52, est relié au carter interne 32.

La virole externe 42b du support de paliers 42 s'étend entre les anneaux 36, 38 et est reliée à l'anneau aval 38 par une partie annulaire 60 élastiquement déformable. Cette partie 60 est relativement souple et est apte à se déformer élastiquement en direction axiale et/ou radiale pour autoriser des dilatations thermiques différentielles en fonctionnement notamment. Cette partie 60, également appelée épingle, peut servir à supporter la virole externe 42b qui n'est alors par supportée par les bras mais par cette partie souple. La virole interne 42a peut être supportée de la même façon au moyen d'une autre partie souple.

La virole interne 42a du support de paliers 42 s'étend autour de la couronne interne 48 et est reliée à cette couronne interne qui comporte des surfaces cylindriques 48d de montage des bagues externes 41a des paliers 41. L'anneau aval 38 est relié par une couronne externe 34 à une zone de jonction entre les carters 24, 32. Cette couronne 34 comprend à son extrémité aval la bride annulaire 34b de fixation du module 50.

La réalisation monobloc de chaque anneau 36, 38 permet de simplifier sa conception et sa fabrication et d'intégrer toutes les fonctions d'un anneau de la technique antérieure, y compris celles de rétention des aubes en cas de rupture, de fonction aérothermique, etc.

L'anneau est refroidi par impact de l'air traversant les orifices 54 de la paroi 52 en fonctionnement. La forme de ces orifices 54 ainsi que la distance entre eux et le corps 51 (épaisseur radiale E1) sont déterminées pour optimiser le refroidissement de l'anneau et donc les performances.

Le module 50 monobloc peut permettre quant à lui de réduire de manière significative (de l'ordre de 25 à 30% dans l'exemple représenté) sa masse par rapport à la technique antérieure.

La fabrication additive permet d'atteindre ces objectifs de fabrication et d'optimisation.

## Revendications

1. Module (50) de turbomachine (10) d'aéronef, ce module comportant :
- au moins un carter annulaire (24, 32) d'une chambre annulaire de combustion (16),
- au moins un anneau d'étanchéité (36, 38) pour une roue de turbine (26), et
- au moins un support annulaire de palier(s) (42),
**caractérisé en ce que** ce module est réalisée d'une seule pièce.

2. Module (50) selon la revendication 1, dans lequel il comprend :
- deux carters annulaires, respectivement interne (32) et externe (24), définissant entre eux un logement annulaire configuré pour recevoir une chambre annulaire de combustion (16).

3. Module (50) selon la revendication 2, dans lequel le carter externe (24) comprend à son extrémité amont une bride annulaire (24a) de fixation du module.

4. Module (50) selon l'une des revendications 1 à 3, dans lequel il comprend :
- deux anneaux d'étanchéité, respectivement amont (36) et aval (38), chacun de ces anneaux d'étanchéité comportant un corps annulaire (51) et une paroi annulaire (52) s'étendant autour du corps annulaire et à distance radiale de ce corps.

5. Module (50) selon la revendication 4, en dépendance de la revendication 2 ou 3, dans lequel l'anneau amont (36), et en particulier sa paroi annulaire (52), est relié audit carter annulaire interne (32).

6. Module (50) selon l'une des revendications précédentes, dans lequel ledit support de palier(s) (42) comprend deux viroles annulaires, respectivement interne (42a) et externe (42b), reliées ensemble par des bras (44) s'étendant sensiblement radialement par rapport à un axe (A) du module.

7. Module (50) selon la revendication 6, en dépendance de la revendication 4 ou 5, dans lequel la virole externe (42b) s'étend entre les anneaux amont (36) et aval (38) et est reliée à l'anneau aval par une partie annulaire (60) élastiquement déformable.

8. Module (50) selon la revendication 6 ou 7, dans lequel la virole interne (42a) s'étend autour d'une couronne interne (48) et est reliée à cette couronne interne, cette couronne comportant au moins une surface cylindrique (48a) de montage d'un palier à roulements (41).

9. Module (50) selon l'une des revendications 4 à 8, en dépendance de la revendication 2 ou 3, dans lequel l'anneau aval (38) est relié par une couronne externe (34) à une zone de jonction entre lesdits carters annulaires interne (32) et externe (24).

10. Module (50) selon la revendication 9, dans lequel la couronne externe (34) comprend à son extrémité aval une bride annulaire (34b) de fixation du module.

11. Procédé de fabrication d'un module (50) selon l'une des revendications précédentes, **caractérisé en ce qu'**il est obtenu par fabrication additive.

## Patentansprüche

1. Modul (50) für ein Flugzeug-Turbostrahltriebwerk (10), wobei dieses Modul umfasst:
- mindestens ein ringförmiges Gehäuse (24, 32) einer ringförmigen Brennkammer (16),
- mindestens einen Dichtungsring (36, 38) für ein Turbinenrad (26), und
- mindestens einen ringförmigen Träger (42) für ein oder mehrere Lager, **dadurch gekennzeichnet, dass** dieses Modul einstückig hergestellt ist.

2. Modul (50) nach Anspruch 1, wobei dieses umfasst:
- zwei ringförmige Gehäuse, ein inneres (32) bzw. ein äußeres (24), die zwischen sich eine ringförmige Ausnehmung definieren, welche dafür ausgelegt ist, eine ringförmige Brennkammer (16) aufzunehmen.

3. Modul (50) nach Anspruch 2, wobei das äußere Gehäuse (24) an seinem stromaufwärtigen Ende einen ringförmigen Flansch (24a) zum Befestigen des Moduls umfasst.

4. Modul (50) nach einem der Ansprüche 1 bis 3, wobei dieses umfasst:
- zwei Dichtungsringe, einen stromaufwärtigen (36) bzw. einen stromabwärtigen (38), wobei jeder dieser Dichtungsringe einen ringförmigen Körper (51) und eine ringförmige Wand (52) umfasst, die sich um den ringförmigen Körper und in radialem Abstand zu diesem Körper erstreckt.

5. Modul (50) nach Anspruch 4 in Abhängigkeit von Anspruch 2 oder 3, wobei der stromaufwärtige Ring (36), und insbesondere seine ringförmige Wand (52), mit dem inneren ringförmigen Gehäuse (32) verbunden ist.

6. Modul (50) nach einem der vorstehenden Ansprüche, wobei der Träger (42) für ein oder mehrere Lager zwei ringförmige Halterungen, eine innere (42a) bzw. eine äußere (42b), umfasst, die durch Arme (44), welche sich in Bezug auf eine Achse (A) des Moduls im Wesentlichen radial erstrecken, miteinander verbunden sind.

7. Modul (50) nach Anspruch 6 in Abhängigkeit von Anspruch 4 oder 5, wobei sich die äußere Halterung (42b) zwischen dem stromaufwärtigen (36) und dem stromabwärtigen (38) Ring erstreckt und durch einen elastisch verformbaren ringförmigen Teil (60) mit dem stromabwärtigen Ring verbunden ist.

8. Modul (50) nach Anspruch 6 oder 7, wobei sich die innere Halterung (42a) um einen inneren Kranz (48) erstreckt und mit diesem inneren Kranz verbunden ist, wobei dieser Kranz mindestens eine zylindrische Fläche (48a) zum Anbringen eines Wälzlagers (41) umfasst.

9. Modul (50) nach einem der Ansprüche 4 bis 8 in Abhängigkeit von Anspruch 2 oder 3, wobei der stromabwärtige Ring (38) durch einen äußeren Kranz (34) mit einem Übergangsbereich zwischen dem inneren (32) und dem äußeren (24) ringförmigen Gehäuse verbunden ist.

10. Modul (50) nach Anspruch 9, wobei der äußere Kranz (34) an seinem stromabwärtigen Ende einen ringförmigen Flansch (34b) zum Befestigen des Moduls umfasst.

11. Verfahren zur Fertigung eines Moduls (50) nach einem der vorstehenden Ansprüche, **dadurch gekennzeichnet, dass** es durch additive Fertigung erhalten wird.

## Claims

1. A module (50) for an aircraft turbine engine (10), this module comprising:
- at least one annular casing (24, 32) of an annular combustion chamber (16),
- at least one sealing ring (36, 38) for a turbine wheel (26), and
- at least one annular bearing support (42),
**characterised in that** this module is made in one piece.

2. The module (50) according to claim 1, wherein it comprises:
- two annular casings, respectively inner (32) and outer (24), defining between them an annular recess configured to receive an annular combustion chamber (16).

3. The module (50) according to claim 2, wherein the outer casing (24) comprises at its upstream end an annular flange (24a) for fixing the module.

4. The module (50) according to one of claims 1 to 3, in which it comprises:
- two sealing rings, respectively upstream (36) and downstream (38), each of these sealing rings comprising an annular body (51) and an annular wall (52) extending around the annular body and at a radial distance from this body.

5. The module (50) according to claim 4, in dependence on claim 2 or 3, wherein the upstream ring (36), and in particular its annular wall (52), is connected to said inner annular casing (32).

6. The module (50) according to one of the preceding claims, wherein said bearing support(s) (42) comprises two annular shrouds, respectively inner (42a) and outer (42b), connected together by arms (44) extending substantially radially with respect to an axis (A) of the module.

7. The module (50) according to claim 6, in dependence on claim 4 or 5, wherein the outer shroud (42b) extends between the upstream (36) and downstream (38) rings and is connected to the downstream ring by an elastically deformable annular part (60).

8. The module (50) according to claim 6 or 7, wherein the inner shroud (42a) extends around an inner ring gear (48), and is connected to this inner ring gear, this ring gear comprising at least one cylindrical surface (48a) for mounting a roller bearing (41).

9. The module (50) according to one of claims 4 to 8, in dependence on claim 2 or 3, wherein the downstream ring (38) is connected by an outer ring gear (34) to a junction zone between said inner (32) and outer (24) annular casings.

10. The module (50) according to claim 9, wherein the outer ring gear (34) comprises at its downstream end an annular flange (34b) for fixing the module.

11. A method of manufacturing a module (50) according to one of the preceding claims, **characterised in that** it is obtained by additive manufacturing.
